# EUROPÄISCHE PATENTSCHRIFT

(11) **EP 1 527 248 B1**
(45) Veröffentlichungstag und Bekanntmachung des Hinweises auf die Patenterteilung: **04.01.2006**
(21) Anmeldenummer: 03720369.2
(22) Anmeldetag: 26.03.2003
(51) Int. Cl.: E06B 9/13

(54) **SCHNELLAUFENDES INDUSTRIETOR MIT FLEXIBLEM BEHANG**
HIGH-SPEED INDUSTRIAL DOOR WITH A FLEXIBLE CURTAIN
PORTE INDUSTRIELLE A GRANDE VITESSE POURVUE D'UN RIDEAU FLEXIBLE

(30) Priorität: 09.08.2002 DE 10236648
(43) Veröffentlichungstag der Anmeldung: 04.05.2005
(73) Patentinhaber: Efaflex Tor- und Sicherheitssysteme GmbH & Co. KG, 84079 Bruckberg (DE)
(72) Erfinder: REJC, Petra, 84036 Landshut (DE)
(74) Vertreter: Kuhnen & Wacker
(86) Internationale Anmeldenummer: PCT/EP2003/003149
(87) Internationale Veröffentlichungsnummer: WO 2004/018820

(56) Entgegenhaltungen:
- DE-U- 29 615 538
- GB-A- 796 502
- US-A- 1 987 488
- US-A- 2 311 470

## Beschreibung

Die Erfindung betrifft ein schnellaufendes Industrietor und mit einem die Toröffnung abdeckenden Torblatt, welches beidseitig ein Schamierband mit einer Vielzahl von abwinkelbar miteinander verbundenen Scharniergliedern aufweist, die mittels Laufrollen in seitlichen Führungen geführt sind, welche das Torblatt berührungsfrei führen.

Aus der Praxis sind schnellaufende Rolltore mit Wicklung des Torblatts oberhalb der Toröffnung bekannt. Hierbei handelt es sich zum Beispiel um Rolltore, bei denen ein Behang aus Weich-PVC oder einem ähnlichen weichen Kunststoff auf einer Wickelwelle in der üblichen Weise aufgewickelt ist und für den Abschluß der Toröffnung abgewickelt werden kann. Derartige Rolltore haben sich in der Praxis sehr bewährt und werden vielfach eingesetzt, da sie kostengünstig bereitstellbar sind und das als Behang ausgebildete Torblatt zudem ganz oder teilweise transparent gestaltet werden kann. Damit ist beispielsweise für einen Gabelstaplerfahrer auch der Bereich auf der anderen Seite des Torblatts einsehbar, so daß Behinderungen oder Gefährdungen weitestgehend vermieden werden können, auch wenn dieses Rolltor von beiden Seiten gleichzeitig befahren werden soll. Ein weiterer Vorteil derartiger Weich-PVC-Rolltore liegt darin, daß das Torblatt ein sehr geringes Gewicht aufweist, weshalb der Energieverbrauch zum Betrieb des Tores gering gehalten werden kann und die dynamischen Belastungen beim Öffnen und Schließen des Tores ebenfalls begrenzt sind. Daher sind bei einem derartigen Rolltor Geschwindigkeiten bis ca. 2 Meter pro Sekunde ohne weiteres möglich, so daß sie sich auch als zeitweiliger Abschluß zwischen zwei aufeinander folgenden Durchfahrten eignen.

Die Windungen des als Behang ausgebildeten Torblatts liegen bei derartigen Weich-PVC-Rolltoren jedoch in der Wicklung unmittelbar aufeinander, so daß sie entsprechend verkratzen und verschmutzen. Hierdurch vermindert sich die Transparenz des Behangs im Laufe der Zeit merklich. Ein weiterer Nachteil dieser Rolltore liegt darin, daß dieser Behang, obwohl er üblicherweise an den Seitenrändern in vertikalen Führungen gehalten wird, bei größeren Windkräften aufgrund einer Dehnung des Materials zum Ausbeulen im Mittelbereich neigt. Ab einer gewissen Windlast oder auch bei einer anderen manuellen Einwirkung kann es dabei zu einem Heraustreten der Seitenränder des Behangs aus den vertikalen Führungen der Toröffnung kommen. Hierbei können Beschädigungen am Behang auftreten und ferner gestaltet sich das Wiedereinführen des Behangs in die Führungen in der Regel problematisch. Nachteilig ist bei einem derartigen Weich-PVC-Rolltor zudem, daß es sich üblicherweise nicht mit einem Sicherheitssystem nach Art eines Tor-Lichtgitters kombinieren läßt, wie es beispielsweise aus der DE 197 39 543 A und der DE 197 39 544 A bekannt ist. Derartige Tor-Lichtgitter erzeugen exakt in der Torschließebene einen "Lichtvorhang", der es gestattet, Hindernisse berührungslos zu erkennen und damit eine Kollision zu vermeiden. Aufgrund der Flexibilität und Dünnwandigkeit des Behangs ist dieses Sicherheitssystem jedoch kaum bei derartigen Rolltoren mit flexiblem Behang einsetzbar, da die Steuerung des Sicherheitssystems die Vorlaufkante des Behangs erfaßt und für die Erkennung eines Hindernisses im weiteren Schließweg des Tores heranzieht.

Ferner ist aus der Praxis eine Bauweise für ein Rolltor mit einem flexiblen Behang bekannt geworden, bei der mehrere Behangsegmente miteinander kombiniert werden, um das flexible Torblatt auszubilden. Die Ränder der Behangsegmente sind dabei kederartig gestaltet und greifen jeweils in ein Verbindungselement ein, welches zwei Behangsegmente miteinander koppelt. Der so mehrstückig ausgebildete Behang wird in herkömmlicher Weise auf einer Wickelwelle im Torsturz aufgewickelt. Durch die Anordnung der Verbindungselemente innerhalb des Behangs ergeben sich jedoch erhebliche Unstetigkeiten, die insbesondere beim Aufwickelvorgang von Bedeutung sind. Dieses bekannte Rolltor kann daher nur mit einer sehr geringen Geschwindigkeit von deutlich weniger als einem Meter pro Sekunde betrieben werden, wobei es zudem sehr geräuschvoll ist, da es insbesondere bei zwei im Wickel aufeinandertreffenden Verbindungselementen zu deutlich hörbaren Klappergeräuschen kommt. Ein derartiges Rolltor ist generell nicht für einen Schnellaufbetrieb geeignet.

Aus der Praxis ist darüber hinaus ein grundsätzlich anderes System für ein schnellaufendes Industrietor bekannt, bei dem ein aus einer Vielzahl von abwinkelbar miteinander verbundenen Aluminium-Lamellen gebildetes Torblatt im Sturzbereich der Toröffnung berührungsfrei geführt wird. So zeigen die Deutschen Patentanmeldungen DE 40 15 214 A, DE 40 15 215 A und DE 40 15 216 A eine Bauweise, bei der die Lamellen des Torblatts mit seitlichen Rollen in Führungsschienen laufen. Diese werden am oberen Ende der Toröffnung zur Torinnenseite in einen geraden Führungsabschnitt umgelenkt, nach einer erneuten Umlenkung um 180° nach unten wieder geradlinig zurückgeführt und gegebenenfalls dann erneut nach einer Umlenkung um 180° nach oben wieder nach hinten geführt. Dadurch entsteht ein langgestreckter Wickel, bei dem jedoch die Lamellen des Torblatts nicht aufeinander aufliegen, sondern berührungsfrei im Abstand voneinander mit den Rollen in den Führungen geführt sind. Überdies sind an den Führungen Lippendichtungen angeordnet, welche am Torblatt anliegen und damit einen winddichten Abschluß für die Toröffnung herstellen.

Ein weiteres Beispiel für ein derartiges schnellaufendes Industrietor ist aus der DE 199 15 376 A1 bekannt, bei welchem die Lamellen aus extrudiertem Kunststoff ausgebildet sind, welche ganz oder auch nur in einem Teilbereich transparent ausgebildet sein können. Da diese Lamellen aus beispielsweise GFK oder PMMA ausgebildet sind, weisen sie ein geringeres Gewicht im Vergleich zu herkömmlichen Lamellen aus Aluminium auf. Die Verwendung dieser Kunststofflamellen aus einem biegeweichen Material wird dabei gemäß diesem bekannten Industrietor dadurch möglich, das die Lamellen im Torsturzbereich in einen Spiralabschnitt mit stetig gebogener Spiralform einlaufen, so daß die dynamischen Belastungen des Torblatts in Grenzen gehalten werden können. Dieses Industrietor hat sich in der Praxis für viele Anwendungen als sehr vorteilhaft erwiesen. So können hier hohe Geschwindigkeiten bis 3 Meter pro Sekunde zuverlässig erzielt werden, während es gleichzeitig auch möglich ist, das Torblatt im wesentlichen durchgehend transparent auszubilden.

Aber auch dieses Industrietor mit Kunststofflamellen ist mit Nachteilen behaftet. So weisen diese Lamellen im Vergleich zu Alu-Lamellen eine derart geringe Festigkeit auf, daß sie kaum für Torbreiten über 4 Meter geeignet sind. Dabei haben diese Kunststofflamellen zudem auch eine geringere Lebensdauer als herkömmliche Aluminiumlamellen. Insbesondere hat sich gezeigt, daß ab einer gewissen Torgröße Risse in dem Bereich auftreten können, in dem die Scharnierbänder an den Lamellen befestigt sind. Ein weiterer Nachteil bei dieser Ausgestaltung liegt darin, daß die Lamellen als Ganzes extrudiert werden, weshalb einer Variation vom Materialen Grenzen gesetzt sind. Insbesondere ist die Bereitstellung dieser Lamellen mit einem erheblichen fertigungstechnischen Aufwand verbunden und daher relativ teuer. Zudem ist es nicht ohne erheblichen Kostenaufwand möglich, die konstruktive Gestalt der Lamelle zu verändern; hierzu muß jeweils eine neue Extrusionsmatrize hergestellt werden. Ferner ist der transparente Bereich bei dieser bekannten Kunststofflamelle verfahrensbedingt nicht glasklar durchsichtig, da insbesondere kleine, jedoch klar erkennbare Bearbeitungsspuren in Richtung der Extrusion unvermeidbar sind.

Andererseits zeichnet sich das schnellaufende Industrietor gemäß der DE 199 15 376 A1 durch seine hohe Windbelastbarkeit, beispielhafte Dichtigkeit, vorbildliche Zuverlässigkeit und hohe Verfügungsbereitschaft aus. Dennoch wird in der Praxis zunehmend ein noch schnelleres und dennoch bezahlbares System gefordert, welches jedoch ohne Abstriche hinsichtlich der vorteilhaften Eigenschaften der bekannten Torsysteme auskommt.

Aus der US 2,311,470 ist ein weiterer Torabschluß nach Art eines Lamellenpanzers bekannt, dessen Torblatt beidseitig ein Schamierband mit einer Vielzahl von abwinkelbar miteinander verbundenen Scharniergliedern aufweist, die mittels Laufrollen in seitlichen Führungen geführt sind und das Torblatt berührungsfrei führen. Hierbei weist das Torblatt eine Vielzahl von Lamellen auf, die mittels starren, halbstarren oder flexiblen Verbindungsleisten miteinander verbunden sind, welche formschlüssig auf den aufeinander zuweisenden Längsrändern der Lamellen festgelegt sind. Ferner erstrecken sich die einzelnen Lamellen quer zu den seitlichen Führungen über das Torblatt hinweg und verbinden dabei zwei einander zugeordnete Scharnierglieder.

Der Erfindung liegt daher die Aufgabe zu Grunde, ein schnellaufendes Industrietor gemäß dem Oberbegriff des Anspruches 1 derart weiterzubilden, daß es mit Geschwindigkeiten von mehr als 3 Metern pro Sekunde betreibbar ist und dabei dennoch mit geringem fertigungstechnischen Aufwand und somit kostengünstig bereitgestellt werden kann.

Diese Aufgabe wird durch ein schnellaufendes Industrietor mit den Merkmalen des Anspruches 1 gelöst. Dieses zeichnet sich insbesondere dadurch aus, daß das Torblatt eine Vielzahl von Versteifungsprofilen und einen flexiblen Behang aufweist, wobei sich jedes Versteifungsprofil quer zu den seitlichen Führungen verlaufend über das Torblatt erstreckt und zwei einander zugeordnete Scharnierglieder verbindet, und wobei der flexible Behang an jedem Versteifungsprofil festgelegt ist.

Damit wird erfindungsgemäß erstmals ein Weg aufgezeigt, wie auch bei einem Torblatt mit flexiblem Behang ein zuverlässiger Schnellaufbetrieb möglich ist. Hierzu kombiniert das erfindungsgemäße Industrietor im wesentlichen die von den schnellaufenden Spiraltoren bekannte Führungstechnik mit einem Behang, der durch sein im Vergleich zu Lamellen geringeres Gewicht mit geringerern Energie- und Steuerungsaufwand betreibbar ist. Die hohen dynamischen Belastungen, welche bei einem Schnellaufbetrieb generell auftreten, werden somit durch das geringere Gewicht des Torblatts gemindert, und in konstruktiver Hinsicht zudem durch das Zusammenwirken der Versteifungsprofile mit den Scharnierbändern, d. h. mit dem damit ausgebildeten Stützgerüst, zuverlässig aufgenommen. Die auf den flexiblen Behang wirkenden Kräfte können hierdurch sehr gering gehalten werden.

Dies ist eine grundlegende Abkehr von dem eingangs erläuterten Prinzip beim Weich-PVC-Rolltor, bei dem der flexible Behang über keine aussteifende Elemente verfügt und sämtliche statische sowie dynamische Lasten innerhalb des Behangs aufgenommen werden müssen. Andererseits ist der erfindungsgemäße Ansatz jedoch auch eine Abkehr von der herkömmlichen Bauweise mit Lamellen, da lediglich noch Versteifungsprofile als Verbindung zwischen zwei einander zugeordneten Scharniergliedern vorliegen, wobei die Versteifungsprofile keinen flächigen Abschluß der Toröffnung herstellen.

Das erfindungsgemäße Industrietor verbindet somit einerseits die Vorteile eines herkömmlichen Rolltores aus Weich-PVC oder dergleichen und andererseits der Spiraltore mit Lamellentorblättern. Insbesondere läßt es sich aufgrund des geringeren Gewichts der Torblatts mit einer Geschwindigkeit von mehr als 4 Metern pro Sekunde betreiben, wobei gleichzeitig keine Beschädigungen am Behang zu befürchten sind, da die auftretenden Lasten über die Versteifungsprofile und die Scharnierbänder aufgenommen werden.

Ferner läßt sich das erfindungsgemäße Industrietor auch wesentlich kostengünstiger bereitstellen als ein herkömmliches Spiraltor mit Lamellen, da der hohe fertigungstechnische Aufwand für die Bereitstellung der Lamellen entfällt. Die Versteifungsprofile können dagegen als eirifache Ziehteile in Stangenform bereitgestellt und entsprechend der jeweiligen Torbreite abgelängt werden. Hierbei sind aufgrund der möglichen Eigenstabilität der Versteifungsprofile auch Torbreiten von sechs oder acht Metern möglich.

Darüber hinaus wird eine Verschmutzung oder ein Verkratzen des flexiblen Behangs dadurch zuverlässig vermieden, daß das Torblatt gänzlich berührungsfrei geführt ist. Der flexible Behang kann daher auch ohne weiteres transparent ausgebildet werden, ohne daß die Durchsichtigkeit des Behangs mit der Zeit beeinträchtigt wird oder verloren geht. Da der flexible Behang zudem an jedem Versteifungsprofil festgelegt ist, können Druckunterschiede zwischen den durch das Industrietor zu trennenden Räumen bzw. eventuell auftretende Windlasten weiterhin zuverlässig aufgenommen werden, ohne daß es zu einem relevanten Ausbeulen des Behangs kommen würde.

Das erfindungsgemäße Industrietor kann daher praktisch verschleißfrei betrieben werden und ist zudem aufgrund der bewährten Führungstechnologie sehr geräuscharm. Ferner läßt es sich im Gegensatz zu herkömmlichen Rolltoren mit flexiblem Behang auch mit einer Sicherheitseinrichtung wie einem Tor-Lichtgitter kombinieren, so daß gerade auch bei der hohen Öffnungs- und Schließgeschwindigkeit von ca. 4 m/s dennoch eine Gefährdung von Personen zuverlässig vermieden werden kann. Da der erfindungsgemäß verwendete flexible Behang zudem auch keine Kräfte für die Bewegung des Torblatts aufnehmen muß, kann er im Hinblick auf seine Witterungs- und Temperaturbeständigkeit hin optimiert werden. Hierdurch läßt sich eine besonders hohe Lebensdauer erzielen.

Vorteilhafte Weiterbildungen des erfindungsgemäßen Industrietores sind Gegenstand der abhängigen Ansprüche.

So kann der Behang in mehrere Behangsegmente unterteilt sein, was insbesondere den Aufwand für die Instandhaltung und, falls erforderlich, eine Reparatur des Behangs wesentlich reduziert. Hierzu ist dann lediglich das beschädigte Behangsegment auszutauschen, während die weiteren Behangsegmente hiervon unberührt bleiben. Eine derartige Reparatur ist somit schnell und kostengünstig durchführbar. Von weiterem Vorteil ist es hierbei, daß transparente und nicht transparente Behangsegmente sowie Behangsegmente mit unterschiedlichen Farben, Beschriftungen etc. beliebig kombinierbar sind, so daß den jeweiligen praktischen Anforderungen und individuellen Wünschen für den Nutzer des erfindungsgemäßen Industrietors Rechnung getragen werden kann. So ist es beispielsweise möglich, etwa auf Kopfhöhe einen transparenten Bereich im flexiblen Behang bereitzustellen, so daß erkennbar ist, ob sich auf der anderen Seite des Torblatts z. B. bereits ein Gabelstapler nähert.

Dadurch, daß der Behang über die gesamte Torbreite am jeweils benachbarten Versteifungsprofil festgelegt ist, wird ein Ausbeulen des Behangs beispielsweise unter einer Windlast noch zuverlässiger vermieden, so daß ein Heraustreten des Behangs aus den seitlichen Führungen und/oder eine Beschädigung des Behangs noch besser unterbunden werden kann. Insbesondere können damit unerwünschte Längendehnungen innerhalb des Materials des Behangs zuverlässig vermieden werden.

Von weiterem Vorteil ist es, wenn der Behang formschlüssig am jeweils benachbarten Versteifungsprofil festgelegt ist. Damit kann eine besonders zuverlässige und dauerhafte Verbindung zwischen diesen Teilen hergestellt werden, welche sich mit konstruktiv einfachen Mitteln realisieren läßt.

Ferner kann der Behang im Bereich jedes Versteifungsprofils einen Keder aufweisen, der in eine hinterschnittene Nut am zugeordneten Versteifungsprofil eingreift. Damit wird auf eine bewährte Technik zurückgegriffen, welche sich durch ihre besonders hohe Zuverlässigkeit auszeichnet und dabei dennoch kostengünstig hergestellt werden kann.

Hierbei ist es von weiterem Vorteil, wenn in den Bereichen des Torblatts, in denen der Behang über ein Versteifungsprofil hinweg verläuft, ein Keder an den Behang angeschweißt ist. Damit wird mit wenigen Elementen eine zuverlässige Verbindung zwischen dem Behang und dem zugeordneten Versteifungsprofil hergestellt, ohne daß die Kontinuität des Behangs auf dessen anderen Oberfläche beeinträchtigt wäre. Hieraus ergibt sich ein besonders gutes Erscheinungsbild des erfindungsgemäßen Industrietores. Darüber hinaus wird durch den Schweißvorgang, der insbesondere ein Hochfrequenzschweißen ist, eine zuverlässige, stabile und dauerhafte Fixierung des Keders am Behang erzielt. Der Behang muß hierzu nicht durchstochen oder durchbrochen werden, so daß sich auch keine Schwachstellen für eine eventuelle Rißbildung oder dergleichen bieten.

Ferner ist randseitig am Behang bzw. an jedem Behangsegment parallel verlaufend zum zugeordneten Versteifungsprofil jeweils ein Keder ausgebildet, so daß auch die Ränder zuverlässig und dauerhaft am jeweils zugeordneten Versteifungsprofil festgelegt werden können.

Von weiterem Vorteil ist es, wenn die Enden jedes Versteifungsprofils derart in die Scharnierglieder eingreifen, daß sie darin in Richtung der Dicke des Torblatts gesehen versenkt angeordnet sind und ihre dem Behang zugewandte Seite mit den Oberflächen der Scharnierglieder im wesentlichen fluchtet. Damit erhält der "Stützrahmen" des Torblatts des erfindungsgemäßen Industrietores auf der dem Behang zugewandten Seite eine im wesentlichen fluchtend verlaufende Gestalt ohne überstehende Elemente, so daß sich die Gefahr einer Beschädigung des Behangs beispielsweise durch ein Verhaken mit vor dem Behang vorliegenden Gegenständen, zuverlässig verhindern läßt. Ferner ergibt sich somit im geschlossenen Zustand des Torblatts eine glatt durchlaufende, im wesentlichen durch die Erstreckung der Hauptfläche des Behangs definierte Behangebene, wodurch mit konstruktiv einfachen Mitteln eine besonders zuverlässige Abdichtung des Behangs im Bereich der seitlichen Führungen hergestellt werden kann. Zudem verbessert sich auch das optische Erscheinungsbild des Torblatts.

Wenn die seitlichen Führungen im Sturzbereich der Toröffnung einen Spiralabschnitt aufweisen, dann kann das Torblatt mit hoher Geschwindigkeit und in platzsparender Weise über dem Torsturz aufgenommen werden, wenn das Tor geöffnet wird. Insbesondere belegt das erfindungsgemäße Industrietor dann keinen größeren Abschnitt im Bereich der Raumdecke, wie dies beispielsweise bei dem aus dem Stand der Technik bekannten langgestreckten Wickel oder einer flachen Führung entlang der Decke der Fall wäre. Zudem lassen sich bei einer stetig gebogenen Spiralform des Spiralabschnitts besonders gute dynamische Verhältnisse für die Bewegung des Torblatts erzielen, so daß höhere Geschwindigkeiten möglich sind und dennoch eine sehr hohe Lebensdauer und Zuverlässigkeit erreicht wird.

Ferner sind im geschlossenen Zustand des Torblatts eine Schamierebene und eine Behangebene gegeben, wobei die Scharnierebene durch Schwenkachsen der abwinkelbar miteinander verbundenen Scharnierglieder und die Behangebene im wesentlichen durch die Erstreckung der Hauptfläche des dünnen Behangs definiert sind, und wobei die Schamierebene und die Behangebene nicht zusammenfallen. Damit läßt sich das erfindungsgemäße Industrietor mit noch geringerem technologischen und fertigungstechnischen Aufwand bereitstellen.

In einer besonders bevorzugten Ausgestaltungsweise sind die Scharnierebene und die Behangebene dabei unmittelbar benachbart zueinander angeordnet. Insbesondere ist die Behangebene somit nur so weit von der Scharnierebene beabstandet, wie es aufgrund der physikalischen Abmessungen der Scharnierelemente erforderlich ist. Damit wird dem Idealfall zur Vermeidung von Spannungen im Behang, nämlich daß die Scharnierebene direkt mit der Behangebene zusammenfällt, im Rahmen des konstruktiv Möglichen nahe gekommen. Ferner wird dadurch erreicht, daß sich bei der Umlenkung des Behangs im Sturzbereich des Tores und insbesondere auch bei einer Anordnung in einem Spiralabschnitt keine wesentliche Längenverkürzung ergibt, so daß der flexible Behang kaum nach innen zum Zentrum der Spirale hin durchhängt.

Wenn der flexible Behang jeweils an einer Stelle benachbart der Schwenkachse der abwinkelbar miteinander verbundenen Scharnierglieder an den Versteifungsprofilen festgelegt ist, läßt sich der Überhang des flexiblen Behangs zwischen zwei Befestigungsstellen an den Versteifungsprofilen im Bereich der Umlenkung über dem Torsturz oder innerhalb eines Spiralabschnitts weiter reduzieren. Die Gefahr einer Beschädigung des Behangs kann somit nochmals herabgesetzt werden.

Die Erfindung wird nachfolgend in Ausführungsbeispielen anhand der Figuren der Zeichnung näher erläutert. Es zeigt:
- Fig.1: eine Vorderansicht des erfindungsgemäßen Industrietores;
- Fig. 2: eine Schnittansicht eines Teilstücks des Torblatts;
- Fig. 3: ein Detail eines Schamierglieds mit einem Versteifungsprofil in einer ersten Variante; und
- Fig. 4: ein Detail eines Scharnierglieds mit einem Versteifungsprofil in einer zweiten Variante.

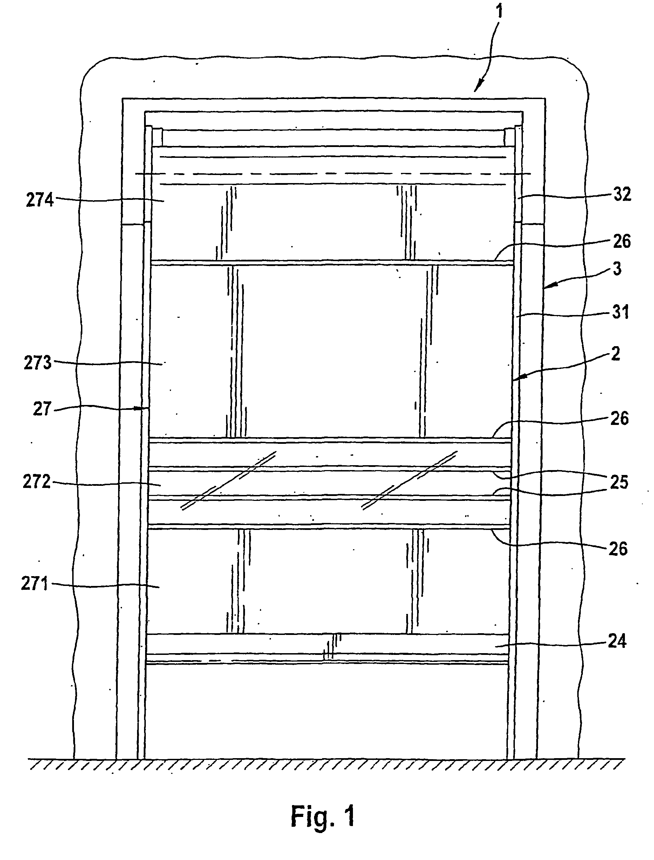

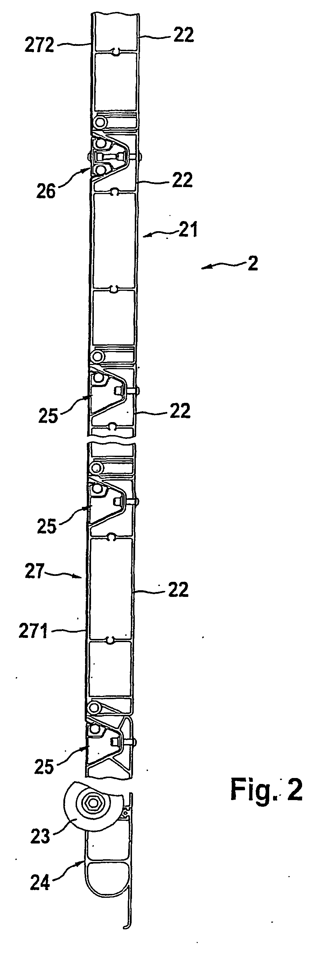

Gemäß der Darstellung in Fig. 1 weist ein schnellaufendes Industrietor 1 ein Torblatt 2 auf, welches in einer Zarge 3 aufgenommen und beidseitig geführt ist. Die seitlichen Führungen in der Zarge 3 weisen hierbei einen im Bereich der Toröffnung vorliegenden Vertikalabschnitt 31 sowie einen im Sturzbereich der Toröffnung vorliegenden Spiralabschnitt 32 auf. Das Torblatt 2 weist beidseitig ein Scharnierband 21 auf, welches in Fig. 2 gezeigt ist und seinerseits eine Vielzahl von abwinkelbar miteinander verbundenen Schamiergliedem 22 enthält. Diese sind mittels Laufrollen 23 in den seitlichen Führungen geführt, wobei in Fig. 2 lediglich eine Laufrolle zur Verdeutlichung gezeigt ist. Die Elemente und deren Funktionsweise zur Führung des Torblatts 2 entsprechen im wesentlichen der aus der DE 199 15 376 A1 bekannten Bauweise, so daß hier auf eine detaillierte Erläuterung verzichtet wird. Das Torblatt 2 weist zudem ein bodenseitiges Abschlußelement 24 auf.

Wie den Figuren entnommen werden kann, enthält das Torblatt ferner zwei Arten von Versteifungsprofilen, nämlich ein erstes Versteifungsprofil 25 mit einer hinterschnittenen Nut 251 sowie ein zweites Versteifungsprofil 26 mit zwei hinterschnittenen Nuten 261 und 262. Ferner enthält das Torblatt 2 einen flexiblen Behang 27, welcher in dieser Ausführungsform gemäß der Darstellung Fig. 1 vier Behangsegmente 271 bis 274 aufweist. Diese Behangsegmente 271 bis 274 übergreifen dabei eine unterschiedliche Anzahl von Versteifungsprofilen 25, d.h. sie haben jeweils eine vorbestimmte Breite, während ihre Ränder jeweils an Versteifungsprofilen 26 aufeinandertreffen und dort fixiert sind. Wie insbesondere aus den Fig. 2 bis 4 erkennbar ist, weisen die Behangsegmente hierzu randseitige Keder 275 sowie durch ein Schweißverfahren auf den Behang aufgesetzte Keder 276 auf, mittels denen sie in den Nuten 251 bzw. 261 und 262 in den Versteifungsprofilen 25 und 26 festgelegt werden.

Das Versteifungsprofil 25 ist dabei ebenso wie das Versteifungsprofil 26 versenkt innerhalb des jeweiligen Schamierglieds 22 derart angeordnet, daß seine dem Behang 27 zugewandte Fläche im wesentlichen fluchtend zur entsprechenden Oberfläche des Scharnierglieds 22 vorliegt. Die Versteifungsprofile 25 und 26 sind von der dem Behang 27 abgewandten Seite mit den Scharniergliedern 22 verschraubt.

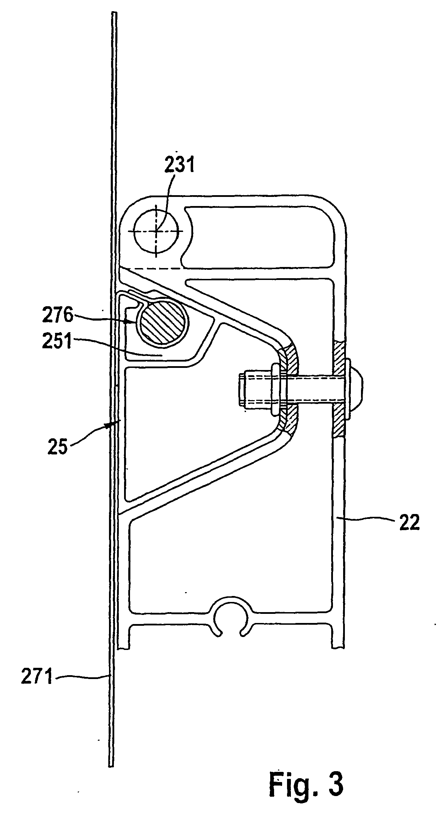

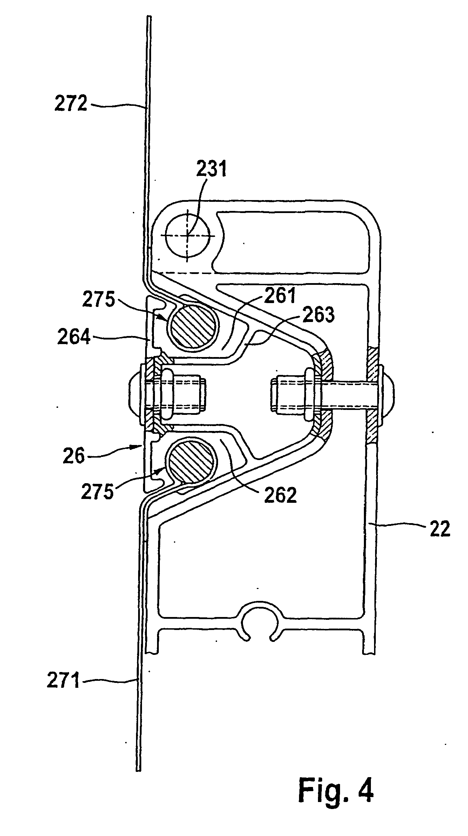

Wie aus den Fig. 2 und 3 erkennbar ist, sind die aufgesetzten Keder 276 so am zugeordneten Behangsegment angeordnet, daß sie möglichst exakt auf die Nut 251 im Versteifungsprofil 25 treffen und eine formschlüssige Verbindung herstellen. Wie aus den Fig. 2 und 4 ersichtlich ist, werden randseitige Keder 275 von zwei benachbarten Behangsegmenten in den Nuten 261 und 262 des Versteifungsprofils 26 formschlüssig aufgenommen. Diese randseitigen Keder 275 sind dabei dadurch gebildet, daß ein Randabschnitt des jeweiligen Behangsegments zur Aufnahme der Kederschnur umgeschlagen und verschweißt ist. Wie insbesondere aus Fig. 4 ferner erkennbar ist, ist das Versteifungsprofil 26 zweiteilig aus einem Grundkörper 263 und einer Abdeckung 264 ausgebildet, wobei die Abdeckung 264 lösbar mit dem Grundkörper 263 verschraubt ist. Zum Austausch oder zur Reparatur einzelner Behangsegmente kann diese Abdeckung 264 abgenommen werden.

Die Keder 275 und 276 sind hierbei durchlaufend über die gesamte Torbreite ausgebildet, so daß sie den Behang 27 ebenfalls über die gesamte Torbreite hinweg am zugeordneten Versteifungsprofil 25 bzw. 26 festlegen.

Wie insbesondere aus den Fig. 3 und 4 erkennbar ist, kommen die Keder 275 und 276 benachbart zu den Drehachsen der Laufrollen 23 zu liegen, welche zugleich die Schwenkachsen 231 der Scharnierglieder 22 bilden. Gleichermaßen ist auch der Behang 27 in konstruktiv bestmöglicher Weise an die Schwenkachse 231 angenähert.

Wie insbesondere aus Fig.1 erkennbar ist, deckt der so angeordnete Behang 27 eine Seite des Torblatts 2 im wesentlichen vollflächig ab, wobei einzelne Behangsegmente ausgetauscht werden können, ohne daß das Torblatt 2 hierzu insgesamt demontiert werden müßte. Ferner ist im vorliegenden Ausführungsbeispiel das Behangsegment 272 transparent ausgebildet, damit der Bereich der anderen Torseite einsehbar ist.

Das transparente Behangsegment 272 ist aus PVC oder dergleichen ausgebildet. Die nicht transparenten Behangsegmente 271, 273 und 274 sind beispielsweise aus einem gewebeverstärktem PVC oder einem ähnlichen Werkstoff ausgebildet. Ebenso sind auch die aufgesetzten Keder 276 zum Beispiel aus PVC ausgebildet, um eine gute Verschweißbarkeit mit dem jeweiligen Behangsegment herzustellen.

In praktischen Versuchen hat sich zudem gezeigt, daß eine exakte Positionierung der aufgesetzten Keder 276 auf die Behangsegmente 271 bis 274 hilfreich ist, um den Behang insgesamt verspannungsfrei halten zu können und somit die Lebensdauer zu erhöhen. Da der Keder 275 und 276 über die gesamte Torbreite hinweg verlaufen, sind hierzu besondere vorrichtungstechnische Maßnahmen an der Hochfrequenzschweißmaschine oder dergleichen erforderlich, um die durch die Scharnierglieder 22 vorgegebene Teilung von üblicherweise 225 mm auch über die gesamte Breite des Tores hinweg aufrecht zu erhalten.

Die Erfindung läßt neben der aufgezeigten Ausführungsform weitere Gestaltungsansätze zu.

So läßt sich das erfindungsgemäße Industrietor 1 auch mit einem Sicherheitssystem nach Art eines Tor-Lichtgitters ausrüsten, da die beidseitigen Scharnierbänder 21 eine ausreichende Dicke des Torblattes herstellen, damit die einzelnen Lichtstrahlen, welche sich exakt in der Schließebene des Torblatts befinden, zuverlässig erfaßt bzw. überdeckt und damit von der Steuerung ausgewertet werden können.

Ferner ist es auch möglich, daß der Behang nicht in Segmente unterteilt, sondern durchgängig als ein Stück ausgebildet ist. Alternativ können die Behangsegmente auch so ausgebildet sein, daß sie nur jeweils zwei benachbarte Versteifungsprofile verbinden, d.h. keine Versteifungsprofile 25 überdecken. Überdies müssen die Fixierpunkte des Behangs an den Versteifungsprofilen nicht durch über die gesamte Torbreite verlaufende Keder ausgebildet sein, sondern können auch punktuell vorliegen. Anstelle der Keder ist zudem beispielsweise auch eine Fixierung des Behangs an den Versteifungsprofilen in der Art denkbar, daß ein Halteelement auf dem Behang aufgesetzt und durch den Behang hindurch mit den Scharniergliedern verschraubt wird.

Die Keder 275 bzw. 276 könnten auch durch Klebung oder auf mechanische Weise durch Vernähen oder dergleichen ausgebildet bzw. aufgesetzt sein.

Ferner ist es auch möglich, daß das Torblatt 2 im Sturzbereich der Toröffnung auf einen langgestreckten Wickel, oder ohne Überdeckung, langgestreckt entlang der Decke geführt wird.

Während der Behang 27 in der bevorzugten Ausführungsform möglichst unmittelbar benachbart zu den Schwenkachsen 231 der funktionellen Scharnierelemente angeordnet ist, um im gestreckten Zustand Verspannungen im Behang sowie beim Abwinkeln der Scharnierglieder ein Auswölben des Behangs in größerem Maße zu verhindern, können die Schwenkachsen auch weiter vom Behang beabstandet, z.B. mittig am jeweiligen Scharnierglied vorgesehen sein. Bei einer derartigen Abwandlung ist dann jedoch Sorge zu tragen, daß der Behang aus einem Material ausgebildet ist, welches den auftretenden Belastungen auf Dauer standhält.

## Patentansprüche

1. Schnellaufendes Industrietor (1) mit einem die Toröffnung abdeckenden Torblatt (2), welches beidseitig ein Scharnierband (21) mit einer Vielzahl von abwinkelbar miteinander verbundenen Schamiergliedem (22) aufweist, die mittels Laufrollen (23) in seitlichen Führungen geführt sind, welche das Torblatt (2) berührungsfrei führen,
wobei das Torblatt (2) eine Vielzahl von Versteifungsprofilen (25, 26) und einen flexiblen Behang (27) aufweist,
wobei sich jedes Versteifungsprofil (25, 26) quer zu den seitlichen Führungen verlaufend über das Torblatt (2) ersteckt und zwei einander zugeordnete Scharnierglieder (22) verbindet, und
wobei der flexible Behang (27) eine Seite des Torblatts (2) im wesentlichen vollflächig abdeckt und dabei über Versteifungsprofile (25) hinweg verläuft sowie an jedem Versteifungsprofil (25, 26) festgelegt ist.

2. Industrietor nach Anspruch 1, **dadurch gekennzeichnet, daß** der Behang (27) in mehrere Behangsegmente (271, 272, 273, 274) unterteilt ist.

3. Industrietor nach Anspruch 1 oder 2, **dadurch gekennzeichnet, daß** der Behang (27) über die gesamte Torbreite am jeweils benachbarten Versteifungsprofil (25, 26) festgelegt ist.

4. Industrietor nach einem der Ansprüche 1 bis 3, **dadurch gekennzeichnet, daß** der Behang (27) formschlüssig am jeweils benachbarten Versteifungsprofil (25, 26) festgelegt ist.

5. Industrietor nach einem der Ansprüche 1 bis 4, **dadurch gekennzeichnet, daß** der Behang (27) im Bereich jedes Versteifungsprofils (25, 26) einen Keder (275, 276) aufweist, der in eine hinterschnittene Nut (251, 261, 262) am zugeordneten Versteifungsprofil (25, 26) eingreift.

6. Industrietor nach Anspruch 5, **dadurch gekennzeichnet, daß** in den Bereichen des Torblatts (2), in denen der Behang (27) über ein Versteifungsprofil (25) hinweg verläuft, ein Keder (276) an den Behang (27) angeschweißt ist.

7. Industrietor nach Anspruch 5 oder 6, **dadurch gekennzeichnet, daß** randseitig am Behang (27) bzw. an jedem Behangsegment (271, 272, 273, 274) parallel verlaufend zum zugeordneten Versteifungsprofil (25, 26) jeweils ein Keder (275) ausgebildet ist.

8. Industrietor nach einem der Ansprüche 1 bis 7, **dadurch gekennzeichnet, daß** die Enden jedes Versteifungsprofils (25, 26) derart in die Scharnierglieder (22) eingreifen, daß sie darin in Richtung der Dicke des Torblatts (2) gesehen versenkt angeordnet sind und ihre dem Behang (27) zugewandte Seite mit den Oberflächen der Scharnierglieder (22) im wesentlichen fluchtet.

9. Industrietor nach einem der Ansprüche 1 bis 8, **dadurch gekennzeichnet, daß** die seitlichen Führungen im Sturzbereich der Toröffnung einen Spiralabschnitt (32) aufweisen.

10. Industrietor nach einem der Ansprüche 1 bis 9, **dadurch gekennzeichnet, daß** im geschlossenen Zustand des Torblatts (2) eine Schamierebene und eine Behangebene gegeben sind, wobei die Scharnierebene durch Schwenkachsen (231) der abwinkelbar miteinander verbundenen Scharnierglieder (22) und die Behangebene im wesentlichen durch die Erstreckung der Hauptfläche des Behangs (27) definiert sind, und wobei die Schamierebene und die Behangebene nicht zusammenfallen.

11. Industrietor nach Anspruch 10, **dadurch gekennzeichnet, daß** die Schamierebene und die Behangebene unmittelbar benachbart zueinander angeordnet sind.

12. Industrietor nach einem der Ansprüche 1 bis 11, **dadurch gekennzeichnet, daß** der flexible Behang (27) jeweils an einer Stelle benachbart einer Schwenkachse (231) der abwinkelbar miteinander verbundenen Scharnierglieder (22) an den Versteifungsprofilen (25,26) festgelegt ist.

## Claims

1. Fast-moving industrial gate (1) with a gate body (2) covering the gateway and having on either side a strap hinge (21) with a multiplicity of hinge members (22) that are interconnected such that they may be oriented at a relative angle, which are guided by rollers (23) in lateral guides guiding said gate body (2) free of contact,
wherein said gate body (2) includes a multiplicity of stiffening profile members (25, 26) and a flexible hanging (27),
wherein each stiffening profile member (25, 26) extends transversely to the lateral guides across said gate body (2) and connects two respective associated hinge members (22), and
wherein said flexible hanging (27) substantially covers the full surface of one side of said gate body (2) while extending across stiffening profile members (25) and being affixed at each stiffening profile member (25, 26).

2. The industrial gate in accordance with Claim 1, **characterized in that** said hanging (27) is subdivided into several hanging segments (271, 272, 273, 274).

3. The industrial gate in accordance with Claim 1 or 2, **characterized in that** said hanging (27) is affixed across the entire gate width at a respective adjacent stiffening profile member (25, 26).

4. The industrial gate in accordance with any one of Claims 1 to 3, **characterized in that** said hanging (27) is affixed at said respective adjacent stiffening profile member (25, 26) in positive engagement.

5. The industrial gate in accordance with any one of Claims 1 to 4, **characterized in that** said hanging (27) includes in the range of each stiffening profile member (25, 26) a reinforcing strip (275, 276) that engages in an undercut groove (251, 261, 262) at said associated stiffening profile member (25, 26).

6. The industrial gate in accordance with Claim 5, **characterized in that** in the ranges of said gate body (2) in which said hanging (27) extends across a stiffening profile member (25), a reinforcing strips (276) is welded to said hanging (27).

7. The industrial gate in accordance with Claim 5 or 6, **characterized in that** one respective reinforcing strips (275) is formed on the edge sides of said hanging (27) or of each hanging segment (271, 272, 273, 274), respectively, which runs in parallel with said associated stiffening profile member (25, 26).

8. The industrial gate in accordance with any one of Claims 1 to 7, **characterized in that** the ends of each stiffening profile member (25, 26) engage in said hinge members (22) so as to be accommodated therein when viewed in the direction of depth of said gate body (2), with their sides facing said hanging (27) substantially being flush with the surfaces of said hinge members (22).

9. The industrial gate in accordance with any one of Claims 1 to 8, **characterized in that** said lateral guides include a spiral section (32) in the lintel range of the gateway.

10. The industrial gate in accordance with any one of Claims 1 to 9, **characterized in that** in the closed condition of said gate body (2) there are a hinge plane and a hanging plane, wherein said hinge plane is substantially defined by pivot axes (231) of said hinge members (22) that are interconnected such that they may be oriented at a relative angle, and said hanging plane is substantially defined by the extension of the major surface of said hanging (27), with said hinge plane and said hanging plane not coinciding.

11. The industrial gate in accordance with Claim 10, **characterized in that** said hinge plane and said hanging plane are arranged in immediate vicinity of each other.

12. The industrial gate in accordance with any one of Claims 1 to 11, **characterized in that** said flexible hanging (27) is affixed to said stiffening profile members (25, 26) in respective locations adjacent a pivot axis (231) of said hinge members (22) that are interconnected such that they may be oriented at a relative angle.

## Revendications

1. Porte industrielle (1) à ouverture rapide avec un panneau (2) couvrant l'ouverture de porte, lequel présente, des deux côtés, une bande charnière (21) ayant une pluralité d'éléments de charnière (22) reliés les uns aux autres de manière pliable, qui sont guidés par des galets de roulement (23) dans des guides latéraux, lesquels guident le panneau (2) sans heurt,
le panneau (2) présentant une pluralité de profils de raidissement (25, 26) et un vantail souple (27);
chaque profil de raidissement (25, 26) s'étendant transversalement aux guidages latéraux passant par-dessus le panneau (2) et reliant deux éléments de charnière (2) associés l'un à l'autre, et
le vantail souple (27) couvrant un côté du panneau (2) pratiquement de toute sa surface et passant dans ce cas au-dessus des profils de raidissement (25) et étant fixé à chaque profil de raidissement (25, 26).

2. Porte industrielle selon la revendication 1, **caractérisée en ce que** le vantail (27) est subdivisé en plusieurs segments de vantail (27, 272, 273, 274).

3. Porte industrielle selon la revendication 1 ou 2, **caractérisée en ce que** le vantail (27) est fixé sur toute la largeur de la porte sur chaque profil de raidissement (25, 26) contigu.

4. Porte industrielle selon l'une quelconque des revendications 1 à 3, **caractérisée en ce que** le vantail (27) est fixé par complémentarité de forme sur chaque profil de raidissement (25, 26) contigu.

5. Porte industrielle selon l'une quelconque des revendications 1 à 4, **caractérisée en ce que** le vantail (27) présente, dans la zone de chaque profil de raidissement (25, 26), un bourrelet (275, 276) qui s'engage dans une rainure de contre-dépouille (251, 261, 262) sur le profil de raidissement (25, 26) associé.

6. Porte industrielle selon la revendication 5, **caractérisée en ce que**, dans les zones du panneau (2), dans lesquelles le vantail (27) passe par-dessus un profil de raidissement (25), un bourrelet (276) est soudé au vantail (27).

7. Porte industrielle selon la revendication 5 ou 6, **caractérisée en ce que**, au bord sur le vantail (27) ou, selon le cas, sur chaque élément de vantail (271, 272, 273, 274) évoluant parallèlement au profil de raidissement associé (25, 26), un bourrelet (275) apparaît chaque fois.

8. Porte industrielle selon l'une quelconque des revendications 1 à 7, **caractérisée en ce que** les extrémités de chaque profil de raidissement (25, 26) s'engagent dans les éléments de charnière (22) de telle façon qu'elles y sont agencées, vu dans le sens de l'épaisseur du panneau (2), de manière encastrée et que leur côté opposé au vantail (27) est essentiellement aligné sur les surfaces des éléments de charnière (22).

9. Porte industrielle selon l'une quelconque des revendications 1 à 8, **caractérisée en ce que** les guides latéraux présentent, dans la zone de linteau de l'ouverture de porte, une section en spirale (32).

10. Porte industrielle selon l'une quelconque des revendications 1 à 9, **caractérisée en ce que**, à l'état fermé du panneau (2), un niveau de charnière et un niveau de vantail sont donnés, le niveau de charnière étant défini par les axes de pivotement (231) des éléments de charnière (22) reliés l'un avec l'autre de manière pliable, et le niveau de vantail étant défini essentiellement par l'extension de la surface principale du vantail (27), le niveau de charnière et le niveau de vantail ne coïncidant pas.

11. Porte industrielle selon la revendication 10, **caractérisée en ce que** le niveau de charnière et le niveau de vantail sont agencés l'un par rapport à l'autre d'une façon directement contiguë.

12. Porte industrielle selon l'une quelconque des revendications 1 à 11, **caractérisée en ce que** le vantail souple (27) est chaque fois fixé aux profils de raidissement (25, 26) en un endroit situé près d'un axe de pivotement (231) des éléments de charnière (22) reliés l'un à l'autre de manière pliable.
